# FASCICULE DE BREVET EUROPEEN

(11) **EP 1 817 959 B1**
(45) Date de publication et mention de la délivrance du brevet: **14.12.2011**
(21) Numéro de dépôt: 07300783.3
(22) Date de dépôt: 08.02.2007
(51) Int. Cl.: A21C 15/00

(54) **Procédé et installation de garnissage d'un produit patissier avec des lamelles de fruits**
Verfahren und Anlage zum Garnieren eines Konditoreiprodukts mit Obstscheiben
Method and plant for decorating a confectionery product with fruit slices

(30) Priorité: 10.02.2006 FR 0601194
(43) Date de publication de la demande: 15.08.2007
(73) Titulaire: Patisserie Pasquier Cerqueux, 49360 Les Cerqueux (FR)
(72) Inventeur: PASQUIER, Serge, 49360, LES CERQUEUX (FR)
(74) Mandataire: Michelet, Alain

(56) Documents cités:
- EP-A- 1 550 375
- EP-A1- 0 236 651
- EP-A1- 0 375 881
- WO-A-03/089887
- DE-U1- 20 306 828
- FR-A1- 2 750 014
- GB-A- 1 134 415
- US-A- 3 532 510
- US-A- 4 576 071
- US-A1- 2003 026 873

## Description

La présente invention concerne le domaine général de la pâtisserie industrielle. Elle concerne plus particulièrement un procédé et une installation pour garnir automatiquement des produits pâtissiers tels que des fonds de tartes avec des lamelles de fruits (genre pommes, poires ou abricots notamment).

Actuellement, la fabrication industrielle des tartes consiste, après mélange et brassage des ingrédients, à façonner mécaniquement des fonds à partir de pâte étalée. Ces fonds de tartes sont ensuite garnis manuellement par des opérateurs ou opératrices au moyen de lamelles de fruits, ceci selon un schéma d'implantation défini, avant de passer en cuisson.

Un tel procédé est décrit dans la demande de brevet EP 0 236 651, lequel document mentionne aussi l'usage d'une machine industrielle pour la mise en place des morceaux de garniture.

Cependant, les opérations de garnissage correspondantes des fonds de tartes sont des opérations répétitives qui s'avèrent relativement pénibles dans le temps.

La présente invention a pour but de remédier à ce problème en proposant un procédé et une installation permettant de garnir les fonds de tartes (ou autres produits pâtissiers) avec des lamelles de fruits, de manière totalement automatisée.

Pour cela, le procédé de garnissage d'un produit pâtissier, du genre fond de tarte par exemple, avec des lamelles de fruits genre pommes, poires, abricots ou autres est caractérisé par le fait qu'il consiste :
- à disposer lesdites lamelles de fruits sur un support plan, de manière individualisée et sans contact les unes avec les autres,
- à effectuer une reconnaissance vidéo du positionnement de chaque lamelle sur leur support plan,
- à prélever lesdites lamelles au moyen d'un robot, en utilisant les informations provenant de ladite reconnaissance vidéo, puis
- à assurer la dépose automatique desdites lamelles sur ledit fond de tarte.
Ces opérations de prélèvement/dépose des lamelles de fruits s'effectuent de préférence unitairement, lamelle après lamelle.

Partant de lamelles de fruits de forme générale allongée ou en croissant (type lamelles de pommes ou de poires), on tient avantageusement compte, par les moyens vidéo, de l'orientation spatiale de chacune desdites lamelles pour assurer leur dépose de manière correcte sur le fond de tarte, afin d'obtenir un schéma d'implantation souhaité, prédéfini.

Selon une autre particularité, le procédé consiste - à définir un ou plusieurs point(s) et/ou ligne(s) de référence sur la surface des lamelles de fruits, quelles que soient la forme et la taille desdites lamelles, - à détecter par les moyens vidéo la position dudit ou desdits point(s) et/ou ligne(s) de référence sur chacune desdites lamelles, et - à assurer la préhension desdites lamelles, ainsi que leur dépose, sur le fond de tarte, en fonction dudit ou desdits point(s) et/ou ligne(s) de référence, selon le schéma d'implantation prédéfini.

Selon encore une autre caractéristique, le procédé consiste à détecter par les moyens vidéo le contour général de chacune desdites lamelles sur leur support plan, puis à comparer ledit contour détecté avec des paramètres préenregistrés, afin d'éliminer les lamelles indésirables.

Selon une forme de réalisation particulièrement intéressante, il est prévu:
- de détecter par les moyens vidéo le contour général de chacune desdites lamelles sur leur support plan,
- de calculer automatiquement la surface desdites lamelles à partir de leur contour détecté, puis
- de déterminer automatiquement le poids de chacune desdites lamelles à partir de leur surface, tenant compte d'une épaisseur et d'une masse volumique préenregistrées supposées constantes.
De la sorte, il est envisageable de sélectionner à partir des moyens vidéo une pluralité de lamelles sur le support plan, afin de constituer des lots comportant l'ensemble des lamelles destinées à être déposées sur un fond de tarte, le nombre de lamelles de chaque lot étant adapté en fonction du poids unitaire de chacune d'elles, de telle sorte que le poids de l'ensemble du lot soit au moins égal à une valeur cible.

L'invention concerne également l'installation pour la mise en oeuvre du procédé défini ci-dessus, comportant :
- un support plan pour la réception des lamelles de fruits,
- des moyens vidéo placés au-dessus dudit support plan, adaptés pour détecter le positionnement desdites lamelles de fruits sur ledit support plan,
- au moins un robot apte à prélever lesdites lamelles de fruits sur ledit support plan, et à les déposer sur un fond de tarte,
- une intelligence programmable, recevant les informations provenant des moyens vidéo et, en fonction desdites informations, apte à commander ledit robot pour assurer le prélèvement desdites lamelles de fruits sur ledit support plan, et leur dépose sur ledit fond de tarte.

Le robot est avantageusement muni d'une tête mobile de prélèvement et de dépose, fonctionnant par aspiration à partir d'un réseau de vide. Dans ce cas, de préférence, la tête de prélèvement du robot est munie de trois ventouses d'aspiration disposées en arc de cercle.

Selon une forme de réalisation préférée, le support plan recevant les lamelles de fruits se présente sous la forme d'un convoyeur sans fin, tout comme les moyens servant de support pour les fonds de tartes, ces derniers moyens convoyeurs étant adaptés pour transporter lesdits fonds de tartes jusqu'au robot de prélèvement/dépose des lamelles de fruits, avant garnissage, et pour assurer ensuite l'évacuation des tartes garnies.

L'invention sera encore illustrée, sans être aucunement limitée, par la description suivante d'une forme de réalisation particulière, donnée uniquement à titre d'exemple et représentée sur les dessins annexés dans lesquels :
- la figure 1 illustre schématiquement les principaux éléments de l'installation permettant le garnissage automatique de fonds de tartes en lamelles de fruits, pour la mise en oeuvre du procédé selon l'invention ;
- la figure 2 est une vue schématique illustrant la disposition des ventouses de préhension/dépose de la tête de prélèvement du robot ;
- la figure 3 montre les point et ligne de référence pris en compte sur une lamelle de pomme pour assurer sa dépose correcte sur le fond de tarte ;
- la figure 4 est une vue schématique illustrant le principe de formation des lots de lamelles destinés à être déposés sur un fond de tarte ;
- les figures 5 à 7 illustrent un principe possible pour obtenir un schéma d'implantation défini et répétitible des lamelles de fruits sur un fond de tarte, ici constitué d'une couronne périphérique associée à une fleur centrale.

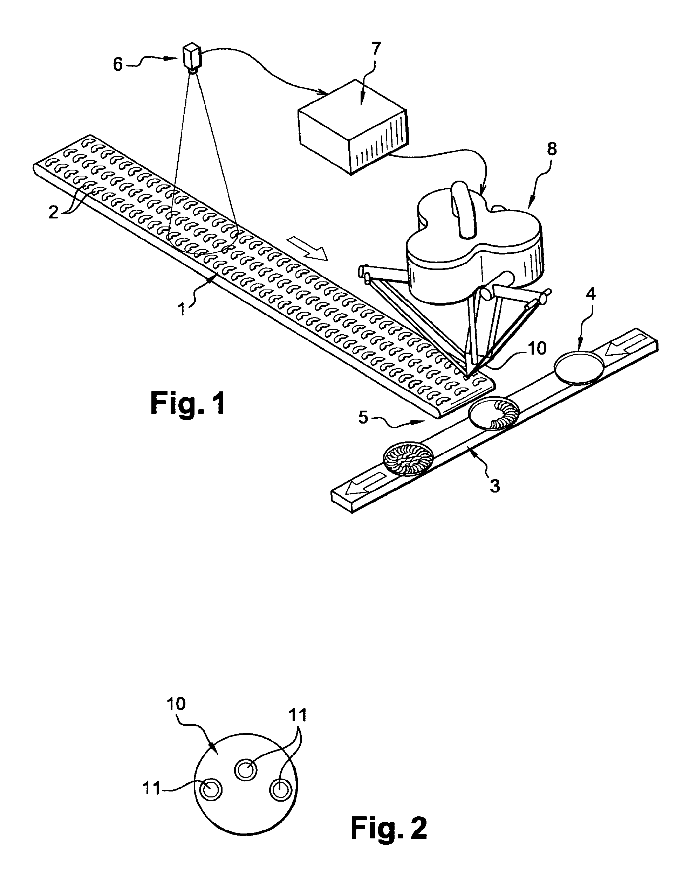

Tel que représenté sur la figure 1, l'installation pour la dépose automatique de lamelles de fruits sur des fonds de tartes comprend :
- un premier convoyeur sans fin 1 sur lequel sont déposées à plat des lamelles de fruits 2 (ici en l'occurrence des lamelles de pommes en forme générale de croissant),
- un second convoyeur sans fin 3 (ici perpendiculaire au premier), transportant des fonds de tartes 4 jusqu'à une zone 5 à proximité du premier convoyeur sans fin 1,
- des moyens de reconnaissance vidéo 6 (par exemple en forme de caméra mono-coup standard) placés au-dessus du premier convoyeur sans fin 1, en amont de la zone 5 de juxtaposition desdits premier et second convoyeurs 1, 3 ; ces moyens de reconnaissance vidéo 6 sont adaptés pour détecter l'emplacement et la forme de chaque lamelle de fruit 2,
- des moyens 7, en forme d'intelligence programmable (par exemple PC avec carte d'acquisition), permettant le traitement des informations provenant des moyens de reconnaissance vidéo 6, et
- un appareil de type robot 8 disposé dans la zone 5 de juxtaposition des premier et second convoyeurs 1, 3, commandé par l'intelligence programmable 7, et adapté pour prélever unitairement les lamelles de fruits 2 sur le premier convoyeur 1, et pour les déposer sur les fonds de tartes 4 transportés par le second convoyeur sans fin 3, cette dépose de lamelles étant réalisée sur chacun desdits fonds de tartes 4, selon un schéma d'implantation prédéfini correspondant à l'aspect final désiré de la tarte.

Les moyens robots 8 utilisés peuvent consister en un robot de type Delta IRB 340 de la Société ABB - RUEIL MALMAISON - FRANCE, permettant d'obtenir des cadences de prélèvement/dépose de l'ordre de 120/minute.

La tête 10 de prélèvement/dépose du robot 8 fonctionne par aspiration à partir d'un réseau de vide. Tel qu'illustré sur la figure 2, la tête de travail 10 comporte trois ventouses 11 disposées en croissant. Cette particularité permet de s'adapter au mieux à toutes les formes et tailles de lamelles et de minimiser le temps de réponse du robot ; elle s'avère particulièrement intéressante pour des lamelles de pommes ou de poires ayant une forme générale cintrée ou en croissant.

La caméra 6 est adaptée pour détecter l'emplacement et le contour général de chacune des lamelles de fruits 2. Pour cela, les lamelles 2 doivent être déposées à plat sur le convoyeur sans fin 1, sans contact les unes avec les autres (comme illustré sur la figure 1).

A partir des informations fournies par la caméra 6, l'intelligence 7 est programmée pour comparer le contour de chaque lamelle 2 avec des paramètres préenregistrés afin d'éliminer celles considérées inutilisables (par exemple des lamelles trop petites, trop grandes, cassées, fissurées, qui se chevauchent ...) et de ne retenir que celles qui sont exploitables. Les lamelles indésirables ne sont pas prélevées par le robot 8 ; elles sont transportées jusqu'à l'extrémité du convoyeur sans fin 1, au niveau de laquelle elles chutent dans un bac de récupération (non représenté).

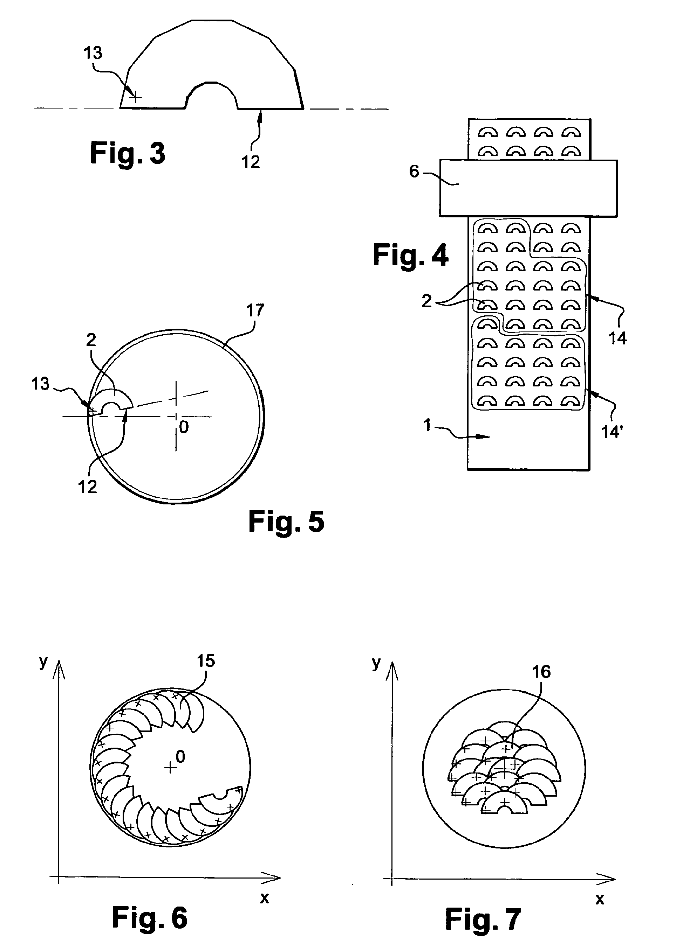

Le garnissage des fonds de tartes 4 avec les lamelles de fruits 2, par le robot 8, est réalisé selon un schéma d'implantation (ou motif) qui est prédéfini (préprogrammé), et de sorte à obtenir un poids de garniture relativement constant (en particulier un poids minimum entrant dans des tolérances définies).
Pour cela :
- à partir du contour détecté des lamelles 2, l'intelligence programmable 7 enregistre leurs positions et orientations individuelles dans l'espace (en particulier pour des lamelles en croissant), de manière à assurer leur préhension et leur dépose individuelle correctes sur le fond de tarte, par le robot 8, ceci à l'endroit précis et selon l'orientation prédéfinis. Dans ce cadre, on définit pour chaque lamelle 2 une ligne de référence correspondant à la base 12 (figure 3) et au moins un point de référence 13, par exemple situé dans le coin gauche des lamelles. En outre,
- des lots 14, 14' de lamelles (figure 4) correspondant chacun à une garniture complète d'un fond de tarte sont constitués virtuellement sur le convoyeur sans fin 1, par l'intelligence programmable 7, en tenant compte du poids de chaque lamelle 2. Le poids de chaque lamelle 2 est estimé par l'intelligence programmable 7 à partir de leur contour détecté par les moyens vidéo 6. Cette estimation de poids est réalisée à partir de la formule suivante : surface X épaisseur de lamelles X masse volumique du fruit, la surface étant calculée à partir du contour détecté, et l'épaisseur ainsi que la masse volumique étant pré-enregistrées et supposées constantes.

Les valeurs d'épaisseur et de masse volumique sont des paramètres qui peuvent être modifiés au niveau de l'intelligence programmable, pour tenir compte des évolutions possibles.

Chaque lot 14, 14' de lamelles, destiné à un fond de tarte particulier, est constitué en additionnant le poids de chaque lamelle, et il est finalisé dès qu'une valeur limite pré-enregistrée est dépassée. Ainsi, pour un même format de tarte, le nombre de lamelles des lots pourra varier de quelques unités en fonction de la surface moyenne des lamelles constituant le lot.

Des variations de poids liées notamment à la fiabilité de détection de la caméra, aux variations éventuelles d'épaisseur de lamelles ou aux évolutions de la densité des fruits (fonction de la variété et de la maturité), entrent dans des tolérances tout-à-fait admissibles.

Une fois les lots de lamelles constitués, il reste à prélever ces lamelles unitairement par le robot 8 et à les déposer sur le fond de tarte 4 selon un plan de pose correspondant à l'aspect final désiré de la tarte. L'intelligence programmable 7 commande les mouvements du robot 8 en conséquence.
Le plan de pose correspondant est adapté au format de la tarte et éventuellement aussi, pour un même format, en fonction du nombre de lamelles constituant le lot.

Chaque lamelle est déposée sur le fond de tarte 4 selon des coordonnées x, y et z, en tenant compte des points et lignes de référence 12, 13 précités.

Par exemple, tel qu'illustré sur la figure 1, le plan de pose correspondant peut être constitué d'une couronne externe 15, appelée « tour », ceinturant une partie centrale 16, appelée « fleur ».
Comme illustré sur les figures 5 et 6, le tour 15 est réalisé par la superposition partielle de lamelles 2 dont la base est placée légèrement en biais par rapport au rayon de la tarte ; on utilise pour cela la ligne de base 12 pour régler l'orientation des lamelles, et le point de référence 13 pour assurer un positionnement correct des lamelles sur une ligne circulaire périphérique imaginaire 17.
Ensuite, tel qu'illustré sur la figure 7, la constitution de la fleur 16 est aussi réalisée par superposition partielle des lamelles 2, mais leurs bases 12 étant toutes parallèles entre elles. Comme on le fait de manière classique manuellement, la bordure externe de la fleur 16 vient légèrement recouvrir la bordure interne du tour 15.

Une fois le garnissage finalisé, le convoyeur sans fin 3 transporte les tartes garnies vers les postes de préparation suivants (cuisson, surgélation ...).

Pour les opérations de garnissage décrites ci-dessus, le convoyeur sans fin 1 peut être à mouvement continu et le convoyeur sans fin 3 à mouvement séquentiel.

Le procédé et l'installation conformes à l'invention permettent de réaliser des garnissages de tartes ou autres produits pâtissiers, de manière complètement automatisée et répétitive, ceci à des cadences élevées et avec une grande qualité de finition.

## Revendications

1. Procédé de garnissage d'un produit pâtissier du genre fond de tarte par exemple, avec des lamelles de fruits (2) genre pommes, poires, abricots ou autres, **caractérisé en ce qu'**il consiste :
- à disposer lesdites lamelles de fruits (2) sur un support plan (1), de manière individualisée et sans contact les unes avec les autres,
- à effectuer une reconnaissance vidéo (6) du positionnement de chaque lamelle (2) sur ledit support plan (1),
- à prélever lesdites lamelles (2) au moyen d'un robot (8), en utilisant les informations provenant de ladite reconnaissance vidéo (6), puis
- à assurer la dépose automatique desdites lamelles (2) sur ledit fond de tarte (4).

2. Procédé de garnissage selon la revendication 1, **caractérisé en ce que** les opérations de prélèvement et de dépose des lamelles de fruits s'effectuent unitairement, lamelle par lamelle.

3. Procédé de garnissage selon l'une quelconque des revendications 1 ou 2, **caractérisé en ce qu'**il consiste, partant de lamelles de fruits (2) de forme générale allongée ou en croissant, à tenir compte par les moyens vidéo (6) de l'orientation spatiale de chacune desdites lamelles (2) pour les déposer correctement sur le fond de tarte (4), afin d'obtenir un schéma d'implantation souhaité.

4. Procédé de garnissage selon la revendication 3, **caractérisé en ce qu'**il consiste à définir un ou plusieurs points (13) et/ou une ou plusieurs lignes (12) de référence sur la surface des lamelles de fruits (2), quelles que soient la forme et la taille desdites lamelles (2), à détecter par les moyens vidéo (6) la position dudit ou desdits points et/ou lignes de référence (12, 13) sur chacune desdites lamelles (2), et à assurer la préhension desdites lamelles (2), ainsi que leur dépose, sur le fond de tarte (4), en fonction dudit ou desdits points et/ou lignes de référence, selon le schéma d'implantation prédéfini.

5. Procédé de garnissage selon l'une quelconque des revendications 1 à 4, **caractérisé en ce qu'**il consiste à détecter par les moyens vidéo (6) le contour général de chacune desdites lamelles (2) sur le support plan (1), puis à comparer ledit contour détecté avec des paramètres préenregistrés, afin d'éliminer les lamelles (2) indésirables.

6. Procédé de garnissage selon l'une quelconque des revendications 1 à 5, **caractérisé en ce qu'**il consiste :
- à détecter par les moyens vidéo (6) le contour général de chacune desdites lamelles (2) sur le support plan (1),
- à calculer automatiquement la surface desdites lamelles (2) à partir de leur contour détecté, puis
- à déterminer automatiquement le poids de chacune desdites lamelles (2) à partir de leur surface, tenant compte d'une épaisseur et d'une masse volumique préenregistrées, supposées constantes.

7. Procédé de garnissage selon la revendication 6, **caractérisé en ce qu'**il consiste à sélectionner à partir des moyens vidéo (6) une pluralité de lamelles (2) sur le support plan (1), afin de constituer des lots comportant l'ensemble des lamelles destinées à être déposées sur un fond de tarte (4), le nombre de lamelles (2) de chaque lot étant adapté en fonction du poids unitaire de chacune d'elles, de telle sorte que le poids de l'ensemble du lot soit au moins égal à une valeur cible.

8. installation pour la mise en oeuvre du procédé selon l'une quelconque des revendications 1 à 7 comportant :
- un support plan (1) pour la réception des lamelles de fruits (2),
- des moyens vidéo (6), placés au-dessus dudit support plan (1), adaptés pour détecter le positionnement desdites lamelles de fruits (2) sur ledit support plan (1),
- au moins un robot (8) apte à prélever lesdites lamelles de fruits (2) sur ledit support plan (1), et à les déposer sur un fond de tarte (4),
- une intelligence programmable (7), recevant les informations provenant des moyens vidéo (6) et, en fonction desdites informations, apte à commander ledit robot (8) pour assurer le prélèvement desdites lamelles de fruits (2) sur ledit support plan (1), et leur dépose sur ledit fond de tarte (4).

9. Installation selon la revendication 8, **caractérisée en ce que** le robot (8) est muni d'une tête mobile (10) de prélèvement et de dépose, fonctionnant par aspiration à partir d'un réseau de vide.

10. Installation selon la revendication 9, **caractérisée en ce que** la tête de prélèvement (10) du robot (8) est munie de trois ventouses d'aspiration (11) disposées en arc de cercle.

11. installation selon l'une quelconque des revendications 8 à 10, **caractérisée en ce que** le support plan (1) recevant les lamelles de fruits (2) se présente sous la forme d'un convoyeur sans fin (1), et **en ce qu'**elle comporte des moyens convoyeurs sans fin (3) servant de support pour les fonds de tartes (4) afin de les transporter jusqu'au robot (8) de dépose des lamelles de fruits (2), avant garnissage, et pour assurer ensuite l'évacuation des tartes garnies.

## Claims

1. A method of garnishing a pastry product of the pie crust type, for example, with slices of fruits (2) such as apples, pears, apricots or others, **characterized in that** it consists in:
- arranging said fruit slices (2) onto a planar support (1), in an individualized way and without contact with each other,
- performing a video recognition (6) of the position of each slice (2) on said planar support (1),
- picking-up said slices (2) by means of a robot (8), using the information from said video recognition (6), and
- performing the automatic placement of said slices (2) onto said pie crust (4).

2. A method of garnishing according to claim 1, **characterized in that** the fruit slices pick-up and placement operations are performed unitarily, slice by slice.

3. A method of garnishing according to any one of claims 1 or 2, **characterized in that** it consists, starting from fruit slices (2) with a generally elongated or crescent shape, in taking into account by the video means (6) the spatial orientation of each of said slices (2) so as to place them correctly onto the pie crust (4), in order to obtain a desired layout pattern.

4. A method of garnishing according to claim 3, **characterized in that** it consists in defining one or several points (13) and/or lines (12) of reference on the surface of the fruit slices (2), whatever the shape or the size of said slices (2) is, detecting by the video means (6) the position of said point(s) and/or line(s) of reference (12, 13) on each of said slices (2), and performing the grasping of said slices (2), as well as the placement thereof onto the pie crust (4), as a function of said point(s) and/or line(s) of reference, in accordance to the predefined layout pattern.

5. A method of garnishing according to any one of claims 1 to 4, **characterized in that** it consists in detecting by the video means (6) the general contour of each of said slices (2) on the planar support (1), and comparing said detected contour with pre-recorded parameters, so as to eliminate the undesirable slices (2).

6. A method of garnishing according to any one of claims 1 to 5, **characterized in that** it consists in:
- detecting by the video means (6) the general contour of each of said slices (2) on the planar support (1),
- automatically calculating the surface area of said slices (2) based on their detected contour, and
- automatically determining the weight of each of said slices (2) based on their surface area, taking into account pre-recorded thickness and density, supposed to be constant.

7. A method of garnishing according to claim 6, **characterized in that** it consists in selecting from the video means (6) a plurality of slices (2) on the planar support (1), so as to form batches comprising all the slices intended to be placed onto a pie crust (4), wherein the number of slices (2) of each batch is adapted based on the unitary weight of each of them, such that the weight of the whole batch is at least equal to a target value.

8. An installation for implementing the method according to any one of claims 1 to 7, comprising:
- a planar support (1) for receiving fruit slices (2),
- video means (6), arranged above said planar support (1), adapted to detect the position of said fruit slices (2) on said planar support (1),
- at least one robot (8) operable to pick-up said fruit slices (2) on said planar support (1), and to place them onto a pie crust (4),
- a programmable intelligence (7), receiving the information from the video means (6), and operable, based on said information, to control said robot (8) so as to perform the pick-up of said fruit slices (2) on said planar support (1) and the placement thereof onto said pie crust (4).

9. An installation according to claim 8, **characterized in that** the robot (8) is provided with a movable pick-up and placement head (10), operated by suction from a vacuum network.

10. An installation according to claim 9, **characterized in that** the pick-up head (10) of the robot (8) is provided with three suction cups (11) arranged into an arc of a circle.

11. An installation according to any one of claims 8 to 10, **characterized in that** the planar support (1) receiving the fruit slices (2) is in the form of an endless conveyor (1), and **in that** it comprises endless conveyor means (3) acting as a support for the pie crusts (4) so as to carry them up to the robot (8) for placing the fruit slices (2), before the garnishing, and afterwards evacuate the garnished pies.

## Patentansprüche

1. Verfahren zum Garnieren eines Bäckereiprodukts zum Beispiel des Typs Tortenboden mit Obststreifen (2) des Typs Äpfel, Birnen, Aprikosen oder sonstige, **dadurch gekennzeichnet, dass** es aus Folgendem besteht:
- Anordnen der Obststreifen (2) auf einer flachen Unterlage (1) einzeln und ohne Berührung miteinander,
- Ausführen einer Videoerkennung (6) der Positionierung jedes Streifens (2) auf der flachen Unterlage (1),
- Entfernen der Streifen (2) mittels eines Roboters (8) unter Verwendung der Informationen, die von der Videoerkennung (6) stammen, dann
- Sicherstellen des automatischen Ablegens der Streifen (2) auf dem Tortenboden (4).

2. Verfahren zum Garnieren nach Anspruch 1, **dadurch gekennzeichnet, dass** die Vorgänge des Entfernens und Ablegens der Obststreifen einzeln, Streifen für Streifen erfolgen.

3. Verfahren zum Garnieren nach einem der Ansprüche 1 oder 2, **dadurch gekennzeichnet, dass** es darin besteht, ausgehend von Obststreifen (2) mit allgemeiner länglicher oder Hörnchenform durch die Videomittel (6) die räumliche Ausrichtung jedes der Streifen (2) zu berücksichtigen, um sie richtig auf dem Tortenboden (4) abzulegen, um das gewünschte Lageschema zu erzielen.

4. Verfahren zum Garnieren nach Anspruch 3, **dadurch gekennzeichnet, dass** es darin besteht, einen oder mehrere Bezugspunkte (13) und/oder eine oder mehrere Bezugslinien (12) auf der Oberfläche der Obststreifen (2) zu definieren, ungeachtet der Form und der Größe der Streifen (2), mit Videomitteln (6) die Position des oder der Bezugspunkte und/oder der Bezugslinie(n) (12, 13) auf jedem der Streifen (2) zu erfassen und das Ergreifen der Streifen (2) sowie ihr Ablegen auf dem Tortenboden (4) in Abhängigkeit von dem oder den Bezugspunkten und/oder der/den Bezugslinie(n) gemäß dem vordefinierten Lageschema sicherzustellen.

5. Verfahren zum Garnieren nach einem der Ansprüche 1 bis 4, **dadurch gekennzeichnet, dass** es darin besteht, durch die Videomittel (6) die allgemeine Kontur jedes der Streifen (2) auf der flachen Unterlage (1) zu erfassen und dann die erfasste Kontur mit zuvor gespeicherten Parametern zu vergleichen, um die unerwünschten Streifen (2) zu eliminieren.

6. Verfahren zum Garnieren nach einem der Ansprüche 1 bis 5, **dadurch gekennzeichnet, dass** es aus Folgendem besteht:
- Erfassen durch die Videomittel (6) der allgemeinen Kontur jedes der Streifen (2) auf der flachen Unterlage (1),
- automatisches Berechnen der Oberfläche der Streifen (2) ausgehend von ihrer erfassten Kontur und dann
- automatisches Bestimmen des Gewichts jedes der Streifen (2) ausgehend von ihrer Oberfläche, unter Berücksichtigung einer Stärke und einer volumenbezogenen Masse, die zuvor aufgezeichnet wurden, die als konstant angenommen werden.

7. Verfahren zum Garnieren nach Anspruch 6, **dadurch gekennzeichnet, dass** es darin besteht, ausgehend von den Videomitteln (6) mehrere Lamellen (2) auf der flachen Unterlage (1) auszuwählen, um Lose zu bilden, die alle Streifen enthalten, die dazu bestimmt sind, auf einem Tortenboden (4) abgelegt zu werden, wobei die Anzahl der Streifen (2) jedes Loses in Abhängigkeit von dem Einzelgewicht jedes der Streifen derart angepasst wird, dass das Gewicht des ganzen Loses mindestens gleich einem Zielwert ist.

8. Anlage zum Umsetzen des Verfahrens nach einem der Ansprüche 1 bis 7, Folgendes aufweisend:
- eine flache Unterlage (1) zum Empfangen der Obststreifen (2),
- Videomittel (6), die oberhalb der flachen Unterlage (1) platziert sind, die das Positionieren der Obststreifen (2) auf der flachen Unterlage (1) erfassen können,
- mindestens einen Roboter (8), der die Obststreifen (2) von der ebenen Unterlage (1) nehmen und sie auf einem Tortenboden (4) ablegen kann,
- eine programmierbare Intelligenz (7), die die Informationen empfängt, die von den Videomitteln (6) kommen und, in Abhängigkeit von den Informationen, den Roboter (8) steuern kann, um das Aufnehmen der Obststreifen (2) auf der flachen Unterlage (1) und ihr Ablegen auf dem Tortenboden (4) sicherzustellen.

9. Anlage nach Anspruch 8, **dadurch gekennzeichnet, dass** der Roboter (8) mit einem beweglichen Kopf (10) zum Aufnehmen und Ablegen versehen ist, der durch Ansaugen ausgehend von einem Vakuumnetz funktioniert.

10. Anlage nach Anspruch 9, **dadurch gekennzeichnet, dass** der Aufnahmekopf (10) des Roboters (8) mit drei Saugnäpfen (11) versehen ist, die im Kreisbogen angeordnet sind.

11. Anlage nach einem der Ansprüche 8 bis 10, **dadurch gekennzeichnet, dass** die flache Unterlage (1), die die Obststreifen (2) empfängt, die Form eines Endlosförderers (1) hat, und dass sie Mittel zum endlosen Fördern (3) aufweist, die als Unterlage für die Tortenböden (4) dienen, um sie bis zum Roboter (8) zum Ablegen der Obststreifen (2) vor dem Garnieren zu transportieren und anschließend das Ausschleusen der garnierten Torten sicherzustellen.
